# EUROPEAN PATENT APPLICATION

(11) **EP 2 187 069 A1**
(43) Date of publication of application: **19.05.2010**
(21) Application number: 09175330.1
(22) Date of filing: 06.11.2009
(51) Int. Cl.: F16B 37/04

(54) **Improved Barrel Nut**

(30) Priority: 18.11.2008 US 273023
(71) Applicant: General Electric Company, Schenectady, NY 12345 (US)
(72) Inventor: Jacobsen, Eric M., Greenville, SC 29607 (US); Hardison, Richard A., Greenville, SC 29607 (US)
(74) Representative: Bedford, Grant Richard

(57) **Abstract**

A barrel nut (920, 940) is provided having an internal female threaded portion adapted to engage a male threaded portion of a fastener. The barrel nut includes a bearing surface and a top surface opposed to the bearing surface. A sidewall surface is interposed substantially between the bearing surface and the top surface. The sidewall surface has a profile shaped so as to reduce the material used in fabricating the barrel nut.

## Description

The present invention relates to an improved barrel nut and, especially, to an improved barrel nut for a rotor blade of a wind turbine.

Apart from the aerodynamic design of a wind turbine rotor blade, the quality and weight of the rotor blades are essentially determined by the design of the blade connection to the rotor hub, i.e. the blade root section. What makes the design of the blade connection to the rotor hub a difficult task is the load transfer from the fiber composite structure of the rotor blade into the metal structure of the rotor hub. Such a load transfer is difficult in principle due to the substantially different properties of the materials involved. A known technique for attaching the rotor blades to the hub is to form nut and bolt connection between the blade root and the hub. A barrel nut is typically used to secure the bolt.

Typically, cylindrical shaped barrel nuts have been used to secure the bolt. These known barrel nuts are large and heavy, and contribute to the overall weight that must be supported by the bearings and tower of a wind turbine. In addition a large amount of material is utilized to fabricate the nuts, and material costs can add up to a substantial amount in large, utility grade wind turbines.

According to an aspect of the invention, a barrel nut is provided having an internal female threaded portion adapted to engage a male threaded portion of a fastener. The barrel nut includes a bearing surface and a top surface opposed to the bearing surface. A sidewall surface is interposed substantially between the bearing surface and the top surface. The sidewall surface has a profile shaped so as to reduce the material used in fabricating the barrel nut.

According to a further embodiment of the present invention, a wind turbine having at least one barrel nut is provided, and the barrel nut has an internal female threaded portion adapted to engage a male threaded portion of a fastener. The barrel nut includes a bearing surface and a top surface opposed to the bearing surface. A sidewall surface is interposed substantially between the bearing surface and the top surface. The sidewall surface has a profile shaped so as to reduce the material used in fabricating the barrel nut.

Various aspects and embodiments of the present invention will now be described in connection with the accompanying drawings, in which:
Fig. 1 is a schematic view of a wind turbine.
Fig. 2 is a front view of a wind turbine rotor blade.
Fig. 3 is a view of a flange section of a wind turbine rotor blade.
Fig. 4 is a side view of a blade root portion according to an embodiment of the present invention.
Fig. 5 is a cross-sectional view of a T-bolt connection in a flange section according to an embodiment of the present invention.
Fig. 6 is a cross-sectional view of a T-bolt connection between the blade root and a flange portion of a rotor hub according to an embodiment of the present invention.
Fig. 7 shows fastening bolts according to an embodiment of the present invention.
Fig. 8 is a side view of a T-bolt connection between the blade root and a flange portion of a rotor hub according to an embodiment of the present invention.
Fig. 9 is a cross-sectional view of a nut and bolt connection between the blade root and a flange portion of a rotor hub according to an embodiment of the present invention.
Fig. 10 is a cross-sectional view of a nut and bolt connection between the blade root and a flange portion of a rotor hub according to another embodiment of the present invention.
Fig. 11 is a cross-sectional view of a nut and bolt connection between the blade root and a flange portion of a rotor hub according to yet another embodiment of the present invention.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

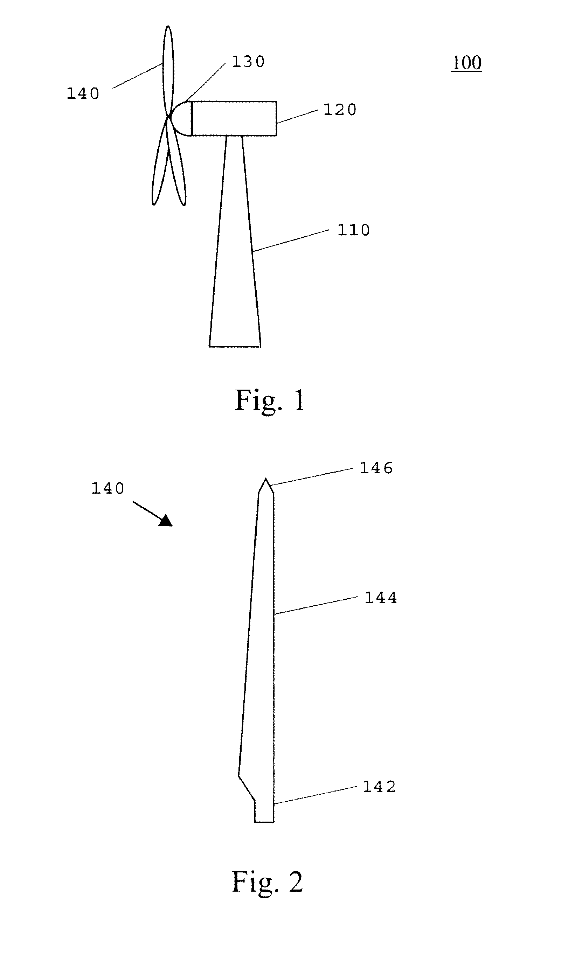

Fig. 1 is a schematic view of a conventional wind turbine 100. The wind turbine 100 includes a tower 110 to which a machine nacelle 120 is mounted at its top end. A hub 130 bearing three rotor blades 140 is mounted to a lateral end of the machine nacelle 120.

The basic configuration of a rotor blade 140 is shown in Fig. 2. Therein, the rotor blade 140 includes a root section 142 which serves for mounting rotor blade 140 to hub 130. Opposite to root section 142, the tip end 146 of rotor blade 140 is disposed. A body section 144 of the rotor blade 140 extends between the root section 142 and the tip end 146.

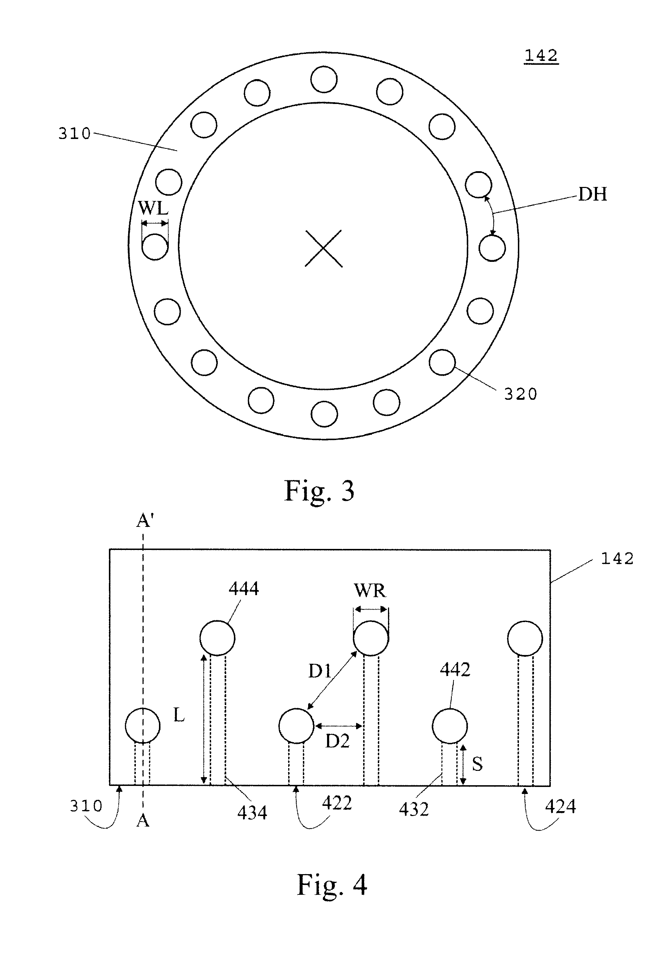

Next, the design of root section 142 and, especially, a flange portion of the root section is explained with reference to Figs. 3 to 6.

Fig. 3 shows the blade flange 310 of a rotor blade when seen from below, i.e. from the root section 142 to the tip 146 of the rotor blade. The flange section 310 has an essentially circular ring-shaped cross section. The blade flange 310 further includes a number of openings 320 corresponding to longitudinal bores (not shown). The openings 320 have a width WL and are evenly spaced by a distance DH along a circumferential direction of the flange section 310. When the rotor blade 140 is mounted to a rotor hub 130, fastening bolts are inserted into the longitudinal bores to form, as one example, a bolt connection as will be explained in more detail below.

Fig. 4 shows a side view of the blade root 142. Therein, it is shown that radial bores 442, 444 are provided in the root section of the blade. These radial bores 442, 444 are configured to receive the cross-bolts of the T-bolt connection. Longitudinal bores 432, 434 (shown in broken lines) extend from the radial bores 442, 444 to the hub end 310 of the blade. At the hub end, the longitudinal bores 432, 434 provide openings 422, 424 through which fastening bolts can be inserted. As shown in Fig. 4, the radial bores are arranged along the circumference of the blade root 142. However, the radial bores can be divided in a first group 442 of bores located proximate the hub end of the blade and a second group of bores 444 located distant from that end. In other words, the first group of radial bores 442 is spaced a small longitudinal distance S from the hub end 310 of the blade and the second group of radial bores 444 is spaced a long longitudinal distance L from the hub end 310. Accordingly, also the longitudinal bores are divided in a first group 432 extending only the small longitudinal distance S from the hub end 310 of the blade and a second group 434 extending the long longitudinal distance L from the hub end 310. Thus, the radial bores 442 of the first group are longitudinally spaced from the radial bores 444 of the second group by the difference L-S between the long and short longitudinal distances. Typically, this distance L-S is in the range of 0.5 to 10 times, preferably in the range of 1 to 3 times, of the diameter WR of the radial bores. Alternatively or in addition, the distance L-S may be in the range of 1 to 60 %, preferably 5 to 40 %, even more preferably 10 to 30 %, of the long longitudinal length L. As it is shown in Fig. 4, the radial bores are alternately selected from the first group 442 and the second group 444. Thus, a distance D1 with a sufficient amount of root laminate is provided between adjacent radial bores 442, 444 of the first and second groups. As a result, the circumferential spacing DH (see Fig. 3) can be reduced so that more bolt connections can be provided for a given root diameter.

In the above described embodiment, the diameters WR, WL of the radial and longitudinal bores were selected to be identical, respectively. Also, only a single small longitudinal distance S from the hub end 310 and only a single long longitudinal distance L from the hub end 310 are provided. However, it should be understood that various embodiments of the present invention may be also realized with varying values of the diameters WR, WL of the radial or longitudinal bores. Likewise, there may be several small and long longitudinal distances provided as long as it is obeyed that two neighboring radial bores are sufficiently spaced in accordance with the root laminate margins.

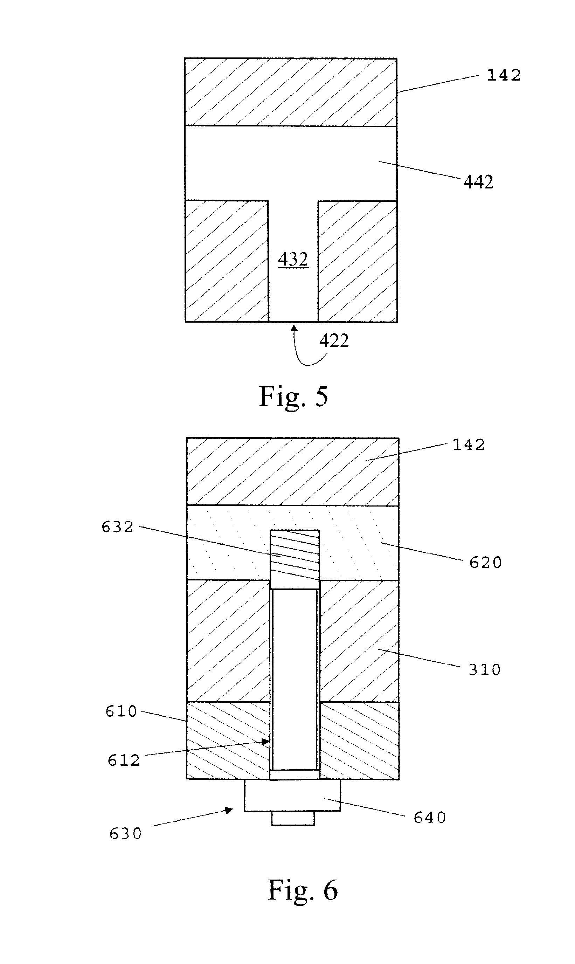

Fig. 5 is a longitudinal cross-sectional view of the flange section of blade root 142 along line A-A' in Fig. 4. The longitudinal bore 432 is located essentially in the middle between the outer sidewall surface and the inner sidewall surface of the rotor blade wall. Furthermore, a radial bore 442 is provided in the sidewall at one end of the longitudinal bore 432. At the opposite end, longitudinal bores 432 and 434 have opening 422 and 424 in the blade flange, respectively. When the rotor blade 140 is mounted to the rotor hub 130, barrel nuts are inserted into the radial bores 442, 444 to form a connection with fastening bolts inserted into the longitudinal bore 432 as will be explained in more detail below with reference to Fig. 6.

Fig. 6 is a cross-sectional view of a nut and bolt connection formed between the root section 142 and a flange 610 of the rotor hub 130. A barrel nut 620 is inserted into the radial bore 442. The barrel nut 620 comprises a central opening with a female thread. The opening is aligned with the position of the longitudinal bore 432. Furthermore, the flange 610 of the rotor hub 130 abuts against the lower face of the flange section 310. The hub flange 610 has a through-hole 612 dimensioned to fit with the longitudinal bore 432 of the blade flange 310. The through-hole 612 and the longitudinal bore 432 are aligned with each other so that a fastening bolt 630 can be inserted into the through-hole 612 and the longitudinal bore 432. The fastening bolt 630 includes a male thread 632 fitting with the female thread of the barrel nut 620. Fastening bolt 630 is fixed to barrel nut 620 via screwed fastening so that a nut-bolt connection is established. A barrel nut 640 may also be used at the opposite end of bolt 630. Thus, the rotor blade 140 can be fixed to the rotor hub 130.

Although the configuration of the nut-bolt connection between the rotor blade and the hub was described with reference to a short longitudinal bore 432, it should be understood that the configuration for a long longitudinal bore 434 is basically identical except for the longitudinal extension of the longitudinal bore. Especially, according to one embodiment of the present invention the configuration of the nut-bolt connection differs only in the longitudinal length of the longitudinal bores and corresponding fastening bolts for short and long bores, respectively.

In the above described bolt-connection arrangement, the flange 310 of the rotor hub, the barrel nut 620 and the fastening bolt 630 are typically made of steel. Typically, the blade flange 310 is made of a fiber reinforced matrix. For example, the fiber reinforced matrix of the blade flange is a material including glass fibers and/or carbon fibers embedded in a matrix material. For example, the matrix material is selected from the group of an epoxy resin, an epoxy novolac, a thermosetting resin like epoxy resin, epoxy novolacs, polyesters, polyimides, both condensation and addition types, phenolic resins, and bismaleimides. Any of those resins may be selected according to the specific technical purpose the matrix material is applied to. Particularly, the resin system should be selected with respect to a particular fiber reinforcement for producing a finished hybrid fiber reinforced part with the desired mechanical and environmental properties. The resin is usually degassed under vacuum after mixing of a hardener/catalyst in the resin, to eliminate or remove all entrapped air from the liquid resin. The resin should therefore be capable of proceeding through a vacuum pressure cycle environment of heat and time without formation of gas bubbles or voids. In such a matrix material, carbon and/or glass fibers are embedded and are typically provided in the form of fiber mats. However, the fibers may also be provided in the form of a non-woven or roving fabric.

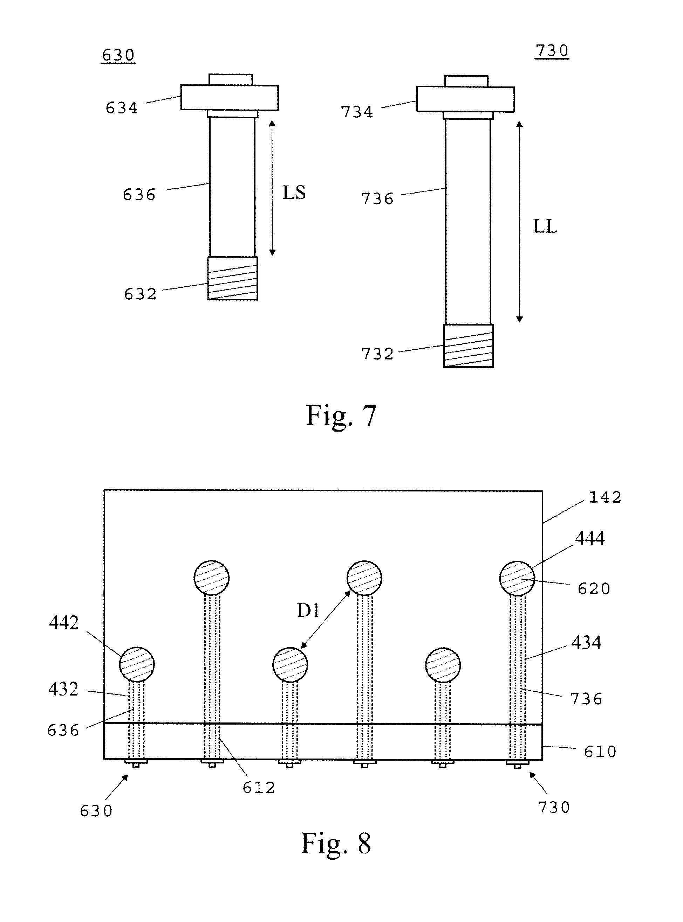

Fig. 7 shows fastening bolts according to an embodiment of the present invention. On the left-hand side of Fig. 7, a fastening bolt 630 of a short type is shown. The short fastening bolt 630 is adapted for being inserted into a short longitudinal bore 432. The short fastening bolt 630 includes a head section 634, a short shaft 636, and a male-threaded end 632 opposite to the head section. The male-threaded end portion 632 is adapted to be screwed into a female thread of a barrel nut 620. The shaft portion 636 has a short length LS which is dimensioned to extend over the short length S of the longitudinal bore 432 and a through-hole 612 of the hub flange. In alternative embodiments, head section 634 can comprise a barrel nut having a female thread, which can be fastened over a threaded end portion of shaft 636. Alternatively, the head section 634 may be formed integral with the shaft 636. In this case, the head section 634 may be formed as a hexnut.

On the right-hand side of Fig. 7, a fastening bolt 730 of the long type is shown. Its basic configuration is the same as for the short-type bolt 630. The long fastening bolt 730 includes a head section 734, a short shaft 736, and a male-threaded end 732 opposite to the head section. As with the short bolt 630, a barrel nut can be used on the male-thereaded end 732 and/or on the head section 734.

Fig. 8 is a side view of a nut-bolt connection between the blade root 142 and a flange portion 610 of the rotor hub according to an embodiment of the present invention. In such a nut-bolt connection, the barrel nuts 620 can be inserted into the radial bores 442, 444 with their female-threaded opening facing the longitudinal bores 432, 434. In addition, the barrel nuts 620 can also be used on the head section of bolts 630 and 730. Short and long longitudinal fastening bolts 630 and 730 are inserted into the short and long longitudinal bores 432, 434 and corresponding through-holes 612 of the hub flange 610, respectively. In one embodiment of the present invention, barrel nuts fasten the fastening bolts 630 and 730. In some cases, the barrel nuts 620 and the fastening bolts 630, 730 can be preinstalled in the rotor blade during manufacturing. In this case, the fastening bolts 630, 730 have a male-threaded portion on both end sides. Then, the rotor blade is mounted on the hub flange on the construction site, i.e. the ends of the fastening bolts 630, 730 extending from the openings 420 are inserted into the through-holes 612 of the hub flange 610. Subsequently, the nut-bolt connection can be finished from inside the hub by fastening barrel nuts onto the male-threaded end portions of the fastening bolts.

The barrel nuts 620 may be used on either or both ends of the bolts 630, 730. The barrel nuts can comprise a large amount of material, and in one example, may use about seven pounds of steel for each nut. Each blade requires many barrel nuts, and a utility grade wind turbine usually has two or three blades per turbine. This results in a large number of barrel nuts being used in each wind turbine. It would be advantageous to reduce the weight of each barrel nut, both for cost reduction (less material used) and for stress reduction (less weight).

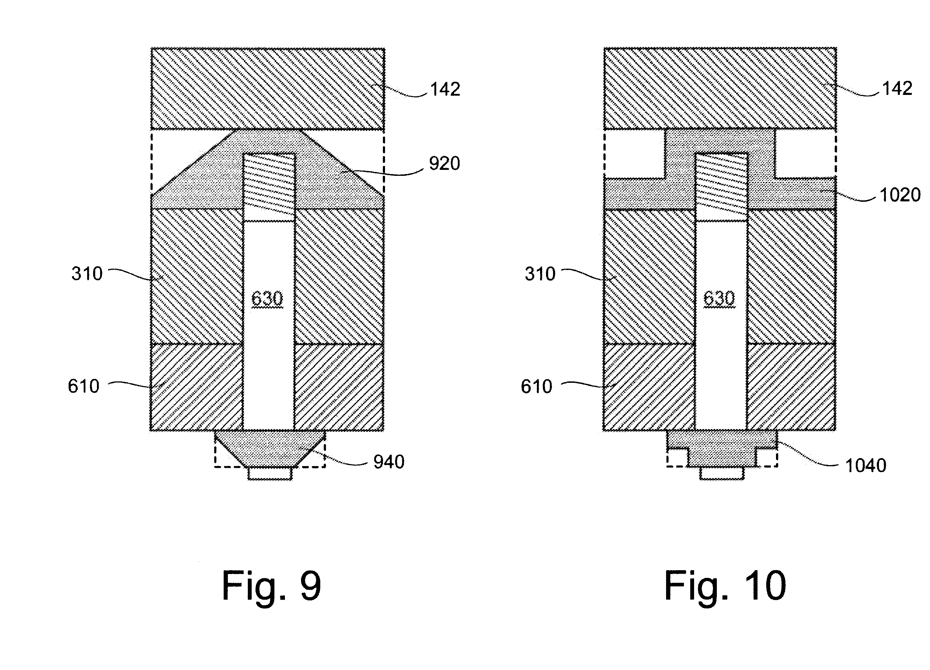

Fig. 9 illustrates a cross-sectional view of a nut and bolt connection formed between the root section 142 and a flange 610 of the rotor hub 130, according to an aspect of the present invention. A barrel nut 920 is inserted into the radial bore 442. The barrel nut 920 comprises a central opening with a female thread. Furthermore, the flange 610 of the rotor hub 130 abuts against the lower face of the flange section 310. The fastening bolt 630 includes a male thread fitting with the female thread of the barrel nut 920. Fastening bolt 630 is fixed to barrel nut 920 via screwed fastening so that a nut-bolt connection is established. A barrel nut 940 may also be used at the opposite end of bolt 630. Thus, the rotor blade 140 can be fixed to the rotor hub 130.

Barrel nuts 920 and 940 have had a portion of their material removed, as is indicated by the dotted lines in Fig. 9. For example, an according to one embodiment of the present invention, about one third or more of the material comprising each barrel nut can be removed. A straight, curved, stepped or compound shape can be cut away from a conventional cylindrical barrel nut to obtain an improved barrel nut having leas material. By using less material, the cost can be reduced. There are many barrel nuts used in a wind turbine, so the cost savings could be substantial. In addition, the improved barrel nuts 920, 940 have reduced weight, which reduces the stresses experienced by the wind turbine components. A benefit of reduced weight is that the lifetime of individual wind turbine components can be increased.

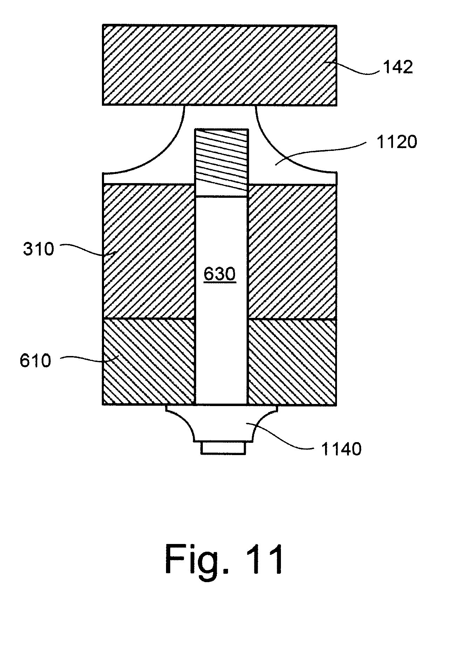

Fig. 10 illustrates a cross-sectional view of a nut and bolt connection formed between the root section 142 and a flange 610 of the rotor hub 130, according to another aspect of the present invention. The barrel nuts 1020 and 1040 have a stepped profile. Fig. 11 illustrates a cross-sectional view of a nut and bolt connection, according to yet another aspect of the present invention. The barrel nuts 1120 and 1140 have a curved or curvilinear profile portion. All of the embodiments herein described provide a barrel nut having reduced material.

The angled, curved or stepped cut can be designed to not cause any substantial change in the joint stiffness ratio for bolt fatigue, as the bearing area is still about 98+% of the contact area. The area eliminated from the barrel nut has a lower-than-average pressure. The barrel nut will not have any substantially reduced strength, as the critical point is a section through the threaded hole. The bending moment also drops sharply away from the edge of the hole, so there is expected to be a minimal change in stiffness. The stepped cut option almost entirely eliminates the laminate shear stress concentration because 180 degrees of the barrel nut bearing area is always maintained.

A number of different barrel nut shapes have been illustrated, however, it is to be understood that reduced material sections of the barrel nuts may extend around the entire nut or only a portion of the nut. For example, the angled cut in Fig. 9, may extend 360 degrees around the nut, or it may be placed in apportion on one or two sides of the nut. Barrel nuts of multiple configurations may be used concurrently (e.g., an angled cut nut 920 as shown in Fig. 9 could be used in the same wind turbine as a stepped nut 1040 as shown in Fig. 10).

This written description uses examples to disclose the invention, including the preferred mode, and also to enable any person skilled in the art to make and use the invention. While the invention has been described in terms of various specific embodiments, those skilled in the art will recognize that the invention can be practiced with modification within the spirit and scope of the claims. The patentable scope of the invention is defined by the claims, and may include other examples that occur to those skilled in the art. Such other examples are intended to be within the scope of the claims of they have structural elements that do not differ from the literal language of the claims, or if they include equivalent structural elements with insubstantial differences from the literal languages of the claims.

Various aspects and embodiments of the present invention are defined by the following numbered clauses:
1. A barrel nut comprising:
   an internal female threaded portion adapted to engage a male threaded portion of a fastener;
   a bearing surface and a top surface opposed to said bearing surface;
   a sidewall surface interposed substantially between said bearing surface and said top surface;
   wherein, said sidewall surface has a profile shaped so as to reduce the material used in fabricating said barrel nut.
2. The barrel nut of clause 1, wherein said profile extends substantially linearly between said top surface and said bearing surface.
3. The barrel nut of any preceding clause, wherein said profile extends substantially stepped between said top surface and said bearing surface.
4. The barrel nut of any preceding clause, wherein said profile extends substantially curvilinearly between said top surface and said bearing surface.
5. The barrel nut of any preceding clause, wherein said barrel nut is used in a wind turbine.
6. The barrel nut of any preceding clause, wherein said barrel nut is used to fasten a blade to a hub of a wind turbine.
7. A wind turbine having at least one barrel nut, said barrel nut comprising:
   an internal female threaded portion adapted to engage a male threaded portion of a fastener;
   a bearing surface and a top surface opposed to said bearing surface;
   a sidewall surface interposed substantially between said bearing surface and said top surface;
   wherein, said sidewall surface has a profile shaped so as to reduce the material used in fabricating said barrel nut.
8. The wind turbine of clause 7, wherein said profile extends substantially linearly between said top surface and said bearing surface.
9. The wind turbine of clause 7 or 8, wherein said profile extends substantially stepped between said top surface and said bearing surface.
10. The wind turbine of any of clauses 7 to 9, wherein said profile extends substantially curvilinearly between said top surface and said bearing surface.
11. The wind turbine of any of clauses 7 to 10, wherein said barrel nut is used to fasten wind turbine components.
12. The wind turbine of any of clauses 7 to 11, wherein said barrel nut is used to fasten a blade to a hub of a wind turbine.

## Claims

1. A barrel nut (920, 940) comprising:
an internal female threaded portion adapted to engage a male threaded portion of a fastener (630);
a bearing surface and a top surface opposed to said bearing surface;
a sidewall surface interposed substantially between said bearing surface and said top surface;
wherein, said sidewall surface has a profile shaped so as to reduce the material used in fabricating said barrel nut.

2. The barrel nut (920,940) of any of the preceding claims, wherein said profile extends substantially linearly between said top surface and said bearing surface.

3. The barrel nut (920,940) of any of the preceding claims, wherein said profile extends substantially stepped between said top surface and said bearing surface.

4. The barrel nut (920,940) of any of the preceding claims, wherein said profile extends substantially curvilinearly between said top surface and said bearing surface.

5. A wind turbine having at least one barrel nut (920), said barrel nut comprising:
an internal female threaded portion adapted to engage a male threaded portion of a fastener;
a bearing surface and a top surface opposed to said bearing surface;
a sidewall surface interposed substantially between said bearing surface and said top surface;
wherein, said sidewall surface has a profile shaped so as to reduce the material used in fabricating said barrel nut.

6. The wind turbine of claim 5, wherein said barrel nut (920,940) is used to fasten wind turbine components.

7. The barrel nut of any of claim 5 or 6, wherein said barrel nut (920,940) is used to fasten a blade to a hub of a wind turbine.
